(19) Europäisches Patentamt
European Patent Office
Office européen des brevets

(11) EP 3 763 547 A1

(12) EUROPEAN PATENT APPLICATION
published in accordance with Art. 153(4) EPC

(43) Date of publication:
**13.01.2021 Bulletin 2021/02**

(21) Application number: **19851128.9**

(22) Date of filing: **10.07.2019**

(51) Int Cl.:
***B60C 11/00*** *(2006.01)* ***B60C 1/00*** *(2006.01)*
***C08L 9/00*** *(2006.01)* ***C08L 9/06*** *(2006.01)*
***C08L 15/00*** *(2006.01)*

(86) International application number:
**PCT/JP2019/027288**

(87) International publication number:
**WO 2020/039778 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.08.2018 JP 2018155427**

(71) Applicant: **Sumitomo Rubber Industries, Ltd.**
**Kobe-shi, Hyogo 651-0072 (JP)**

(72) Inventor: **NAKATANI, Masako**
**Kobe-shi, Hyogo 651-0072 (JP)**

(74) Representative: **TBK**
**Bavariaring 4-6**
**80336 München (DE)**

# (54) TREAD RUBBER COMPOSITION AND PNEUMATIC TIRE

(57) Provided are tread rubber compositions providing a balanced improvement of fuel economy, wet-grip performance, and ice-grip performance, and pneumatic tires including treads at least partially containing the compositions. A tread rubber composition satisfying relationships (1) and (2): |(-30°C E*)-(-10°C E*)|≤150 [MPa] (1) wherein "-30°C E*" denotes the complex modulus measured at -30°C, an initial strain of 10%, a dynamic strain of 0.5%, and a frequency of 10 Hz, and "-10°C E*" denotes the complex modulus measured at -10°C, an initial strain of 10%, a dynamic strain of 0.25%, and a frequency of 10 Hz; 1.5≤0°C tanδ/30°C tanδ≤3.0 (2) wherein "0°C tanδ" denotes the loss tangent measured at 0°C, an initial strain of 10%, a dynamic strain of 2.5%, and a frequency of 10 Hz, and "30°C tanδ" denotes the loss tangent measured at 30°C, an initial strain of 10%, a dynamic strain of 2%, and a frequency of 10 Hz.



Printed by Jouve, 75001 PARIS (FR)

## Description

TECHNICAL FIELD

The present invention relates to tread rubber compositions and pneumatic tires.

BACKGROUND ART

The materials of winter tires (e.g., studless winter tires) and all-season tires have been designed with low-temperature properties in mind. For example, Patent Literature 1 proposes rubber compositions containing a specific resin. However, the conventional techniques leave room for improvement in terms of a balanced improvement of fuel economy, wet grip performance, and ice grip performance.

CITATION LIST

PATENT LITERATURE

Patent Literature 1: JP 2013-249423 A

SUMMARY OF INVENTION

TECHNICAL PROBLEM

The present invention aims to solve the problem and provide tread rubber compositions that provide a balanced improvement of fuel economy, wet grip performance, and ice grip performance, and pneumatic tires including treads at least partially containing the rubber compositions.

SOLUTION TO PROBLEM

The present invention relates to a tread rubber composition, satisfying the following relationships (1) and (2) :

$$|(-30°C\ E^*) - (-10°C\ E^*)| \leq 150\ [MPa] \quad (1)$$

wherein the term "-30C E*" denotes a complex modulus measured at a temperature of -30°C, an initial strain of 10%, a dynamic strain of 0.5%, and a frequency of 10 Hz, and the term "-10°C E*" denotes a complex modulus measured at a temperature of -10°C, an initial strain of 10%, a dynamic strain of 0.25%, and a frequency of 10 Hz; and

$$1.5 \leq 0°C\ \tan\delta / 30°C\ \tan\delta \leq 3.0 \quad (2)$$

wherein the term "0°C tanδ" denotes a loss tangent measured at a temperature of 0°C, an initial strain of 10%, a dynamic strain of 2.5%, and a frequency of 10 Hz, and the term "30°C tanδ" denotes a loss tangent measured at a temperature of 30°C, an initial strain of 10%, a dynamic strain of 2%, and a frequency of 10 Hz.

The |(-30°C E*) - (-10°C E*)| value in relationship (1) is preferably 120 MPa or less, more preferably 110 MPa or less.

The 0°C tan5/30°C tanδ value in relationship (2) is preferably 2.7 or less.

The 0°C tan5/30°C tanδ value in relationship (2) is preferably 2.1 or more.

The rubber composition preferably contains, based on 100% by mass of a rubber component therein, 50% by mass or more of a styrene-butadiene rubber having a styrene content of 30% by mass or higher and a vinyl content of 40% by mass or higher.

The rubber composition preferably contains polybutadiene rubber.

The polybutadiene rubber is preferably a modified polybutadiene rubber.

The present invention also relates to a pneumatic tire, including a tread at least partially containing the rubber composition.

The pneumatic tire is preferably a winter tire or all-season tire.

ADVANTAGEOUS EFFECTS OF INVENTION

According to the present invention, tread rubber compositions satisfying predetermined relationships provide a balanced improvement of fuel economy, wet grip performance, and ice grip performance.

DESCRIPTION OF EMBODIMENTS

The tread rubber compositions of the present invention satisfy the following relationships (1) and (2). This provides a balanced improvement of fuel economy, wet grip performance, and ice grip performance.

$$|(-30°C\ E^*) - (-10°C\ E^*)| \leq 150\ [MPa] \quad (1)$$

In relationship (1), the term "-30°C E*" denotes the complex modulus measured at a temperature of -30°C, an initial strain of 10%, a dynamic strain of 0.5%, and a frequency of 10 Hz, and the term "-10°C E*" denotes the complex modulus measured at a temperature of -10°C, an initial strain of 10%, a dynamic strain of 0.25%, and a frequency of 10 Hz.

$$1.5 \leq 0°C\ \tan\delta / 30°C\ \tan\delta \leq 3.0 \quad (2)$$

In relationship (2), the term "0°C tanδ" denotes the loss tangent measured at a temperature of 0°C, an initial strain of 10%, a dynamic strain of 2.5%, and a frequency of 10 Hz, and the term "30°C tanδ" denotes the loss tangent measured at a temperature of 30°C, an initial strain of 10%, a dynamic strain of 2%, and a frequency of 10 Hz.

The rubber compositions have the above-mentioned advantageous effect. The reason for the effect is not exactly clear, but may be explained as follows.

The |(-30°C E*) - (-10°C E*)| value in relationship (1) indicates the temperature dependence of the complex modulus (E*) of the rubber composition. A smaller value means that the E* is less temperature dependent. The satisfaction of relationship (1) ensures good ice grip performance.

The present invention uses complex moduli (E*) measured at temperatures -30°C and -10°C. This is based on the finding that the temperature dependence of E* determined at specific temperatures (-30°C and -10°C) correlates with the ice grip performance very well. The satisfaction of relationship (1) ensures good ice grip performance.

Likewise, the 0°C tanδ/30°C tanδ value in relationship (2) indicates the temperature dependence of the loss tangent (tanδ) of the rubber composition. A value closer to 1 means that the tanδ is less temperature dependent.

However, the studies of the present inventor have revealed that although simply reducing the temperature dependences of the E* and tanδ of the rubber composition provides good ice grip performance, it leaves room for improvement in terms of a balanced improvement of fuel economy, wet grip performance, and ice grip performance. As a result of extensive experimentation on this problem, the present inventor has found that when the 0°C tanδ/30°C tanδ value is within the range indicated above, good fuel economy and wet grip performance can be achieved while having a small temperature dependence of tanδ and thus ensuring good ice grip performance.

The present invention uses tanδ measured at temperatures 0°C and 30°C. This is based on the finding that the temperature dependence of tanδ determined at specific temperatures (0°C and 30°C) correlates with the ice grip performance, fuel economy, and wet grip performance very well. The satisfaction of relationship (2) ensures good ice grip performance, fuel economy, and wet grip performance.

Thus, when both relationships (1) and (2) are satisfied, a synergistic and balanced improvement of fuel economy, wet grip performance, and ice grip performance can be achieved.

The E* and tanδ values are determined by performing viscoelastic testing on the vulcanized rubber composition.

Moreover, the problem (purpose) to be solved by the present invention is achieving a balanced improvement of fuel economy, wet grip performance, and ice grip performance, and the solution to this problem is to formulate a tread rubber composition which satisfies relationships (1) and (2). In other words, the essential feature of the present invention is to formulate a tread rubber composition which satisfies relationships (1) and (2) .

In relationship (1), the |(-30°C E*) - (-10°C E*)| value is preferably 140 MPa or less, more preferably 120 MPa or less, still more preferably 110 MPa or less, particularly preferably 100 MPa or less, most preferably 90 MPa or less. From the standpoint of ensuring good wet grip performance, the |(-30°C E*) - (-10°C E*)| value is preferably 10 MPa or more, more preferably 20 MPa or more, still more preferably 30 MPa or more, particularly preferably 40 MPa or more, most preferably 50 MPa or more, further most preferably 80 MPa or more.

The -30°C E* value may appropriately vary within a range that satisfies relationship (1), and is preferably 30 MPa or more, more preferably 60 MPa or more, still more preferably 80 MPa or more, particularly preferably 100 MPa

or more, most preferably 110 MPa or more, but is preferably 200 MPa or less, more preferably 170 MPa or less, still more preferably 165 MPa or less, particularly preferably 160 MPa or less, most preferably 150 MPa or less, further preferably 130 MPa or less.

Likewise, the -10°C E* value is preferably 5 MPa or more, more preferably 10 MPa or more, still more preferably 15 MPa or more, particularly preferably 20 MPa or more, but is preferably 80 MPa or less, more preferably 70 MPa or less, still more preferably 50 MPa or less, particularly preferably 30 MPa or less.

In relationship (2), the 0°C tanδ/30°C tanδ value is preferably 2.9 or less, more preferably 2.7 or less, still more preferably 2.5 or less, particularly preferably 2.4 or less, but is preferably 1.7 or more, more preferably 1.9 or more, still more preferably 2.1 or more, particularly preferably 2.3 or more.

The 0°C tanδ value may appropriately vary within a range that satisfies relationship (2), and is preferably 0.60 or less, more preferably 0.51 or less, still more preferably 0.50 or less, particularly preferably 0.46 or less, most preferably 0.45 or less, further preferably 0.40 or less, further preferably 0.39 or less, further preferably 0.36 or less, further preferably 0.30 or less, but is preferably 0.20 or more, more preferably 0.22 or more, still more preferably 0.23 or more, particularly preferably 0.26 or more.

Likewise, the 30°C tanδ value is preferably 0.30 or less, more preferably 0.25 or less, still more preferably 0.20 or less, particularly preferably 0.19 or less, but is preferably 0.05 or more, more preferably 0.10 or more, still more preferably 0.15 or more, particularly preferably 0.16 or more.

The E* and tanδ of the rubber composition can be controlled by the type and amount of the chemicals (in particular, rubber component, filler) incorporated in the rubber composition. For example, the E* tends to be increased by increasing the amount of filler, while the tanδ tends to be reduced by using a modified rubber or using silica as filler. Moreover, improving compatibility between multiple rubbers, if used in combination as the rubber component, tends to reduce the temperature dependences of the E* and tanδ.

More specifically, the relationships (1) and (2), E* [MPa], and tanδ values indicated above can be imparted to a vulcanized rubber composition, for example, by appropriately selecting a rubber component, silica, and silane coupling agents as described later, or by appropriately adjusting the amounts thereof. In particular, these properties may be imparted by, for example, a method of using a combination of SBR and BR as a rubber component while improving compatibility therebetween, a method of using a modified polymer as a rubber component, a method of using a mercapto silane coupling agent, a method of increasing the amount of silica, or a method of adding silica in portions for kneading.

In the method of using a combination of SBR and BR as a rubber component while improving compatibility therebetween, an SBR having a styrene content of 30% by mass or higher and a vinyl content of 40% by mass or higher, which has good compatibility with BR, may be used to improve compatibility between SBR and BR. Also, when the BR is a modified BR or a combination of a BR having a low cis content (low-cis BR) and a BR having a high cis content (high-cis BR), the compatibility between SBR and BR can also be improved. The use of a modified BR allows silica, which will usually be localized in SBR, to be distributed in the BR phase as well so that the compatibility between SBR and BR can be improved. When a combination of a high-cis BR and a low-cis BR is used, the high-cis BR improves compatibility between SBR and the low-cis BR so that the compatibility between SBR and BR can be improved.

In particular, when SBR, a high-cis BR, and a low-cis BR are combined, the high-cis BR improves compatibility between the SBR and low-cis BR, and further, the compatibility between the SBR and high-cis BR/low-cis BR is further improved when the styrene and vinyl contents of the SBR are within the respective ranges indicated above. Thus, the uniformity of the rubber component is synergistically improved.

By using a combination of SBR and BR as a rubber component while improving compatibility therebetween, the uneven distribution of silica between rubbers is reduced. The uneven distribution of silica between rubbers is further reduced especially when SBR, a high-cis BR, and a low-cis BR are combined.

On the other hand, with the improvement of the compatibility between SBR and BR, the glass transition temperature of the rubber composition is generally reduced, possibly resulting in a deterioration in μ-RR (0°C tanδ/30°C tanδ) balance. However, when the rubber component includes a modified polymer, the deterioration in μ-RR (0°C tanδ/30°C tanδ) valance can be reduced. Further, when the silane coupling agent used is a highly reactive mercapto silane coupling agent, it promotes hydrophobization of silica to allow the silica to disperse well, thereby reducing the deterioration in μ-RR (0°C tanδ/30°C tanδ) valance. It should be noted that the deterioration in μ-RR (0°C tanδ/30°C tanδ) valance means that the 0°C tanδ/30°C tanδ value is too small.

As described above, it is preferred to use a combination of BR and an SBR having a styrene content of 30% by mass or higher and a vinyl content of 40% by mass or higher, more preferably a combination of a modified BR and an SBR having a styrene content of 30% by mass or higher and a vinyl content of 40% by mass or higher, or a combination of a high-cis BR, a low-cis BR, and an SBR having a styrene content of 30% by mass or higher and a vinyl content of 40% by mass or higher, particularly preferably a combination of a high-cis BR, a low-cis BR, and an SBR having a styrene content of 30% by mass or higher and a vinyl content of 40% by mass or higher.

In the above embodiments, the amount of the SBR having a styrene content of 30% by mass or higher and a vinyl content of 40% by mass or higher based on 100% by mass of the rubber component is preferably 50% by mass

or more.

Moreover, in the above embodiments, it is also preferred that the rubber component include a modified polymer.

Moreover, in the above embodiments, it is also preferred to use a mercapto silane coupling agent.

Chemicals that may be used will be described below.

Examples of the rubber component include diene rubbers such as isoprene-based rubbers, polybutadiene rubber (BR), styrene-butadiene rubber (SBR), styreneisoprene-butadiene rubber (SIBR), acrylonitrile-butadiene rubber (NBR), chloroprene rubber (CR), and butyl rubber (IIR). The rubber component may include a single rubber or a combination of two or more rubbers. Among these, BR and/or SBR is preferred, with a combination of BR and SBR being preferred.

The rubber component preferably has a weight average molecular weight (Mw) of 150,000 or more, more preferably 350,000 or more. The upper limit of the Mw is not limited, but is preferably 4,000,000 or less, more preferably 3,000,000 or less.

Any SBR may be used, including, for example, those commonly used in the tire industry such as emulsion-polymerized SBR (E-SBR) and solution-polymerized SBR (S-SBR). These may be used alone or in combinations of two or more.

The SBR preferably has a weight average molecular weight (Mw) of 150,000 or more, more preferably 300,000 or more, still more preferably 500,000 or more, but preferably 1,000,000 or less, more preferably 800,000 or less. An SBR having an Mw falling within the range indicated above has good compatibility with BR, with the result that the advantageous effect tends to be more suitably achieved.

The SBR preferably has a ratio of the weight average molecular weight (Mw) to the number average molecular weight (Mn) (Mw/Mn) of 1.0 or more, more preferably 1.5 or more, still more preferably 2.0 or more, but preferably 6.0 or less, more preferably 4.0 or less, still more preferably 3.0 or less. An SBR having an Mw/Mn ratio falling within the range indicated above has good compatibility with BR, with the result that the advantageous effect tends to be more suitably achieved.

The SBR preferably has a styrene content of 15% by mass or higher, more preferably 25% by mass or higher, still more preferably 30% by mass or higher, but preferably 50% by mass or lower, more preferably 40% by mass or lower. An SBR having a styrene content falling within the range indicated above has good compatibility with BR, with the result that the advantageous effect tends to be more suitably achieved.

The SBR preferably has a vinyl content of 20% by mass or higher, more preferably 30% by mass or higher, still more preferably 40% by mass or higher, but preferably 60% by mass or lower, more preferably 50% by mass or lower. An SBR having a vinyl content falling within the range indicated above has good compatibility with BR, with the result that the advantageous effect tends to be more suitably achieved.

The SBR may be an unmodified SBR or a modified SBR.

The modified SBR may be any SBR having a functional group interactive with filler such as silica. For example, it may be a chain end-modified SBR obtained by modifying at least one chain end of SBR with a compound (modifier) having the functional group (i.e., a chain end-modified SBR terminated with the functional group); a backbone-modified SBR having the functional group in the backbone; a backbone- and chain end-modified SBR having the functional group in both the backbone and chain end (e.g., a backbone-and chain end-modified SBR in which the backbone has the functional group and at least one chain end is modified with the modifier); or a chain end-modified SBR that has been modified (coupled) with a polyfunctional compound having two or more epoxy groups in the molecule so that a hydroxyl or epoxy group is introduced. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Among these, amino (preferably amino whose hydrogen atom is replaced with a C1-C6 alkyl group), alkoxy (preferably C1-C6 alkoxy), alkoxysilyl (preferably C1-C6 alkoxysilyl), and amide groups are preferred.

The SBR may be an SBR product manufactured or sold by Sumitomo Chemical Co., Ltd., JSR Corporation, Asahi Kasei Corporation, or Zeon Corporation, for example.

The amount of the SBR, if present, based on 100% by mass of the rubber component is preferably 20% by mass or more, more preferably 50% by mass or more, still more preferably 60% by mass or more, but is preferably 90% by mass or less, more preferably 80% by mass or less, still more preferably 70% by mass or less. When the amount falls within the range indicated above, the advantageous effect tends to be better achieved.

Non-limiting examples of the BR include those commonly used in the tire industry. They may be used alone or in combinations of two or more.

The BR preferably has a weight average molecular weight (Mw) of 150,000 or more, more preferably 400,000 or more, but preferably 1,000,000 or less, more preferably 800,000 or less. A BR having an Mw falling within the range indicated above has good compatibility with SBR, with the result that the advantageous effect tends to be more suitably achieved.

The rubber composition preferably contains a combination of a first BR having a cis content of 90% by mass or higher (high-cis BR) and a second BR having a cis content of 50% by mass or lower (low-cis BR).

The first BR may have any cis content that is 90% by mass or higher, preferably 95% by mass or higher, more preferably 97% by mass or higher. The upper limit of the cis content is not limited, and may be 100% by mass. A first BR having a cis content falling within the range indicated above has good compatibility with SBR, with the result that the advantageous effect tends to be more suitably achieved.

The second BR may have any cis content that is 50% by mass or lower, preferably 40% by mass or lower, more preferably 38% by mass or lower, but preferably 10% by mass or higher, more preferably 20% by mass or higher, still more preferably 25% by mass or higher, particularly preferably 30% by mass or higher. A second BR having a cis content falling within the range indicated above has good compatibility with SBR, with the result that the advantageous effect tends to be more suitably achieved.

The BR (first BR, second BR) may be either an unmodified BR or a modified BR, preferably a modified BR. In particular, the second BR is preferably a modified BR.

The use of a modified BR allows silica, which will usually be localized in the SBR phase, to be distributed in the BR phase so that the compatibility between BR and SBR can be improved.

Moreover, with the improvement of the compatibility between BR and SBR, the glass transition temperature (Tg) is usually reduced, possibly resulting in a deterioration in the balance between wet grip performance and fuel economy ($\mu$-RR balance). However, by using a modified BR, it is possible to ensure a good balance between these properties.

Examples of the modified BR include those into which the functional groups listed above are introduced. Preferred embodiments are as described for the modified SBR.

The BR may be a product available from Ube Industries, Ltd., JSR Corporation, Asahi Kasei Corporation, or Zeon Corporation, for example.

The amount of the BR, if present (the combined amount of the first BR and second BR, if used in combination), based on 100% by mass of the rubber component is preferably 10% by mass or more, more preferably 20% by mass or more, still more preferably 30% by mass or more, but is preferably 80% by mass or less, more preferably 50% by mass or less, still more preferably 40% by mass or less. When the amount falls within the range indicated above, the BR has good compatibility with SBR, and therefore the advantageous effect tends to be more suitably achieved.

When the first BR and second BR are combined, the amount of the first BR based on 100% by mass of the rubber component is preferably 5% by mass or more, more preferably 10% by mass or more, but is preferably 40% by mass or less, more preferably 25% by mass or less, still more preferably 20% by mass or less. Likewise, the amount of the second BR based on 100% by mass of the rubber component is preferably 5% by mass or more, more preferably 10% by mass or more, but is preferably 40% by mass or less, more preferably 25% by mass or less, still more preferably 20% by mass or less. When the amounts fall within the respective ranges indicated above, the BR has good compatibility with SBR, and therefore the advantageous effect tends to be more suitably achieved.

The amount of the modified BR, if used, based on 100% by mass of the total BR is preferably 30% by mass or more, more preferably 40% by mass or more, but is preferably 70% by mass or less, more preferably 60% by mass or less. When the amount falls within the range indicated above, the BR has good compatibility with SBR, and therefore the advantageous effect tends to be more suitably achieved.

Herein, the weight average molecular weight (Mw) and number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The cis content (cis-1,4-butadiene unit content) and vinyl content (1,2-butadiene unit content) can be determined by infrared absorption spectrometry. The styrene content can be determined by $^1$H-NMR analysis.

The rubber composition may contain silica.

Examples of the silica include dry silica (anhydrous silicic acid) and wet silica (hydrous silicic acid). Wet silica is preferred because it has a large number of silanol groups. These may be used alone or in combinations of two or more.

The silica preferably has a nitrogen adsorption specific surface area ($N_2SA$) of 100 $m^2/g$ or more, more preferably 150 $m^2/g$ or more, but preferably 300 $m^2/g$ or less, more preferably 200 $m^2/g$ or less. When the $N_2SA$ falls within the range indicated above, the advantageous effect tends to be better achieved.

The $N_2SA$ of the silica is determined by the BET method in accordance with ASTM S3037-81.

The silica may be a product available from Degussa, Rhodia, Tosoh Silica Corporation, Solvay Japan, or Tokuyama Corporation, for example.

The amount of the silica, if present, per 100 parts by mass of the rubber component is preferably 30 parts by mass or more, more preferably 40 parts by mass or more, still more preferably 50 parts by mass or more, but is preferably 150 parts by mass or less, more preferably 100 parts by mass or less, still more preferably 80 parts by mass or less. When the amount falls within the range indicated above, the advantageous effect tends to be better achieved.

The amount of the silica based on 100% by mass of the total filler (reinforcing filler) in the rubber composition is preferably 60% by mass or more, more preferably 70% by mass or more, still more preferably 80% by mass or more. The upper limit is not limited.

The rubber composition containing silica preferably further contains a silane coupling agent.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as $\gamma$-glycidoxypropyltriethoxysilane and $\gamma$-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Examples of usable commercially available silane coupling agents include products of Degussa, Momentive, Shin-Etsu Silicone, Tokyo Chemical Industry Co., Ltd., AZmax. Co., and Dow Corning Toray Co., Ltd. These silane coupling agents may be used alone or in combinations of two or more. Among these, mercapto silane coupling agents are preferred because then the advantageous effect tends to be better achieved.

Examples of particularly suitable mercapto silane coupling agents include silane coupling agents represented by the formula (S1) below and silane coupling agents containing linking units A and B represented by the following formulas (I) and (II), respectively. Among these, silane coupling agents containing linking units A and B of formulas (I) and (II) are preferred because in such cases the advantageous effect tends to be better achieved.

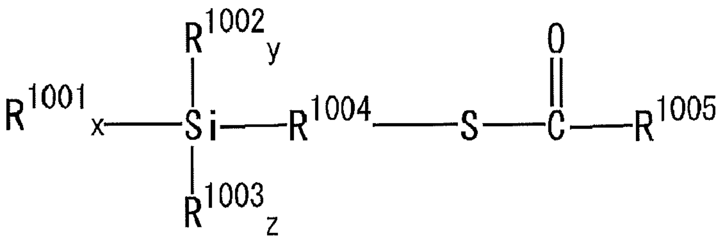

( S1 )

In formula (S1), $R^{1001}$ represents a monovalent group selected from -Cl, -Br, $-OR^{1006}$, $-O(O=)CR^{1006}$, $-ON=CR^{1006}R^{1007}$, $-ON=CR^{1006}R^{1007}$, $-NR^{1006}R^{1007}$, and $-(OSiR^{1006}R^{1007})_h(OSiR^{1006}R^{1007}R^{1008})$ wherein $R^{1006}$, $R^{1007}$, and $R^{1008}$ may be the same or different and each represent a hydrogen atom or a C1-C18 monovalent hydrocarbon group, and h is 1 to 4 on average; $R^{1002}$ represents $R^{1001}$, a hydrogen atom, or a C1-C18 monovalent hydrocarbon group; $R^{1003}$ represents $R^{1001}$, $R^{1002}$, a hydrogen atom, or the group: $-[O(R^{1009}O)_j]_{0.5}-$ wherein $R^{1009}$ represents a C1-C18 alkylene group, and j represents an integer of 1 to 4; $R^{1004}$ represents a C1-C18 divalent hydrocarbon group; $R^{1005}$ represents a C1-C18 monovalent hydrocarbon group; and x, y, and z are numbers satisfying the following relationships: $x + y + 2z = 3$, $0 \le x \le 3$, $0 \le y \le 2$, and $0 \le z \le 1$.

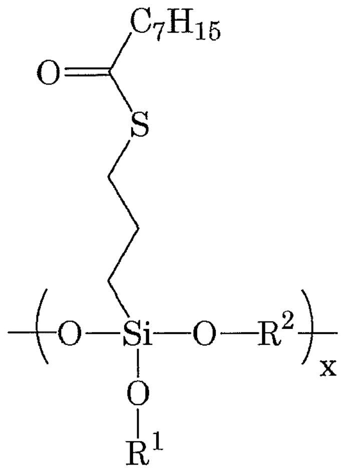

( I )

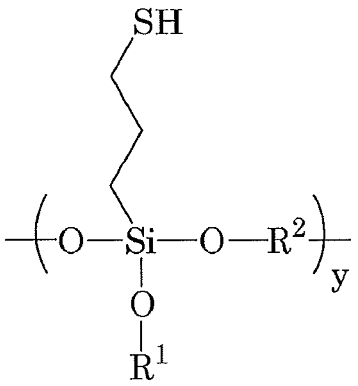

(II)

In formulas (I) and (II), x represents an integer of 0 or larger; y represents an integer of 1 or larger; $R^1$ represents a hydrogen atom, a halogen atom, a branched or unbranched C1-C30 alkyl group, a branched or unbranched C2-C30 alkenyl group, a branched or unbranched C2-C30 alkynyl group, or the alkyl group in which a terminal hydrogen atom is replaced with a hydroxyl or carboxyl group; and $R^2$ represents a branched or unbranched C1-C30 alkylene group, a branched or unbranched C2-C30 alkenylene group, or a branched or unbranched C2-C30 alkynylene group, provided that $R^1$ and $R^2$ may together form a cyclic structure.

Preferably, $R^{1005}$, $R^{1006}$, $R^{1007}$, and $R^{1008}$ in formula (S1) are each independently selected from the group consisting of C1-C18 linear, cyclic, or branched alkyl, alkenyl, aryl, and aralkyl groups. When $R^{1002}$ is a C1-C18 monovalent hydrocarbon group, it is preferably selected from the group consisting of linear, cyclic, or branched alkyl, alkenyl, aryl, and aralkyl groups. $R^{1009}$ is preferably a linear, cyclic, or branched alkylene group, particularly preferably a linear alkylene group. Examples of $R^{1004}$ include C1-C18 alkylene groups, C2-C18 alkenylene groups, C5-C18 cycloalkylene groups, C6-C18 cycloalkylalkylene groups, C6-C18 arylene groups, and C7-C18 aralkylene groups. The alkylene and alkenylene groups may be either linear or branched. The cycloalkylene, cycloalkylalkylene, arylene, and aralkylene groups may each have a functional group such as a lower alkyl group on the ring. Such an $R^{1004}$ is preferably a C1-C6 alkylene group, particularly preferably a linear alkylene group such as a methylene, ethylene, trimethylene, tetramethylene, pentamethylene, or hexamethylene group.

Specific examples of $R^{1002}$, $R^{100S}$, $R^{1006}$, $R^{1007}$, and $R^{1008}$ in formula (S1) include methyl, ethyl, n-propyl, isopropyl, n-butyl, isobutyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, cyclohexenyl, phenyl, tolyl, xylyl, naphthyl, benzyl, phenethyl, and naphthylmethyl groups.

Examples of $R^{1009}$ in formula (S1) include linear alkylene groups such as methylene, ethylene, n-propylene, n-butylene, and hexylene groups; and branched alkylene groups such as isopropylene, isobutylene, and 2-methylpropylene groups.

Specific examples of the silane coupling agents of formula (S1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. These silane coupling agents may be used alone or in combinations of two or more. Among these, 3-octanoylthiopropyltriethoxysilane is particularly preferred.

The linking unit A content of the silane coupling agents containing linking units A and B of formulas (I) and (II) is preferably 30 mol% or higher, more preferably 50 mol% or higher, but is preferably 99 mol% or lower, more preferably 90 mol% or lower, while the linking unit B content is preferably 1 mol% or higher, more preferably 5 mol% or higher, still more preferably 10 mol% or higher, but is preferably 70 mol% or lower, more preferably 65 mol% or lower, still more preferably 55 mol% or lower. The combined content of the liking units A and B is preferably 95 mol% or higher, more preferably 98 mol% or higher, particularly preferably 100 mol%.

The linking unit A or B content refers to the amount including the linking unit A or B present at the end of the silane coupling agent, if any. In the case where the linking unit A or B is present at the end of the silane coupling agent, its form is not particularly limited as long as it forms a unit corresponding to formula (I) representing the linking unit A or formula (II) representing the linking unit B.

Examples of the halogen atom for $R^1$ include chlorine, bromine, and fluorine.

Examples of the branched or unbranched C1-C30 alkyl group for $R^1$ include methyl, ethyl, n-propyl, isopropyl, n-butyl, iso-butyl, sec-butyl, tert-butyl, pentyl, hexyl, heptyl, 2-ethylhexyl, octyl, nonyl, and decyl groups. The number of

carbons in the alkyl group is preferably 1 to 12.

Examples of the branched or unbranched C2-C30 alkenyl group for $R^1$ include vinyl, 1-propenyl, 2-propenyl, 1-butenyl, 2-butenyl, 1-pentenyl, 2-pentenyl, 1-hexenyl, 2-hexenyl, and 1-octenyl groups. The number of carbons in the alkenyl group is preferably 2 to 12.

Examples of the branched or unbranched C2-C30 alkynyl group for $R^1$ include ethynyl, propynyl, butynyl, pentynyl, hexynyl, heptynyl, octynyl, nonynyl, decynyl, undecynyl, and dodecynyl groups. The number of carbons in the alkynyl group is preferably 2 to 12.

Examples of the branched or unbranched C1-C30 alkylene group for $R^2$ include ethylene, propylene, butylene, pentylene, hexylene, heptylene, octylene, nonylene, decylene, undecylene, dodecylene, tridecylene, tetradecylene, pentadecylene, hexadecylene, heptadecylene, and octadecylene groups. The number of carbons in the alkylene group is preferably 1 to 12.

Examples of the branched or unbranched C2-C30 alkenylene group for $R^2$ include vinylene, 1-propenylene, 2-propenylene, 1-butenylene, 2-butenylene, 1-pentenylene, 2-pentenylene, 1-hexenylene, 2-hexenylene, and 1-octenylene groups. The number of carbons in the alkenylene group is preferably 2 to 12.

Examples of the branched or unbranched C2-C30 alkynylene group for $R^2$ include ethynylene, propynylene, butynylene, pentynylene, hexynylene, heptynylene, octynylene, nonynylene, decynylene, undecynylene, and dodecynylene groups. The number of carbons in the alkynylene group is preferably 2 to 12.

In the silane coupling agents containing linking units A and B of formulas (I) and (II), the total number of repetitions (x + y) consisting of the sum of the number of repetitions (x) of the linking unit A and the number of repetitions (y) of the linking unit B is preferably in the range of 3 to 300.

The amount of the silane coupling agent, if present, per 100 parts by mass of the silica is preferably 3 parts by mass or more, more preferably 5 parts by mass or more, but is preferably 20 parts by mass or less, more preferably 15 parts by mass or less. When the amount falls within the range indicated above, the advantageous effect tends to be better achieved.

The rubber composition may contain carbon black.

Non-limiting examples of the carbon black include N134, N110, N220, N234, N219, N339, N330, N326, N351, N550, and N762. These may be used alone or in combinations of two or more.

The carbon black preferably has a nitrogen adsorption specific surface area ($N_2SA$) of 80 $m^2/g$ or more, more preferably 100 $m^2/g$ or more, but preferably 150 $m^2/g$ or less, more preferably 130 $m^2/g$ or less. When the $N_2SA$ falls within the range indicated above, the advantageous effect tends to be better achieved.

Herein, the $N_2SA$ of the carbon black is measured in accordance with JIS K6217-2:2001.

The carbon black may be a product available from Asahi Carbon Co., Ltd., Cabot Japan K.K., Tokai Carbon Co., Ltd., Mitsubishi Chemical Corporation, Lion Corporation, NSCC Carbon Co., Ltd., or Columbia Carbon, for example.

The amount of the carbon black, if present, per 100 parts by mass of the rubber component is preferably 5 parts by mass or more, more preferably 10 parts by mass or more, but is preferably 50 parts by mass or less, more preferably 20 parts by mass or less. When the amount falls within the range indicated above, the advantageous effect can be more suitably achieved.

The rubber composition may contain an oil.

Examples of the oil include process oils, vegetable oils, and mixtures thereof. Examples of the process oils include paraffinic process oils, aromatic process oils, and naphthenic process oils. Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These oils may be used alone or in combinations of two or more. Among these, process oils are preferred, with aromatic process oils being more preferred, because in such cases the advantageous effect can be well achieved.

The oil may be a product available from Idemitsu Kosan Co., Ltd., Sankyo Yuka Kogyo K.K., Japan Energy Corporation, Olisoy, H&R, Hokoku Corporation, Showa Shell Sekiyu K.K., or Fuji Kosan Co., Ltd., for example.

The amount of the oil, if present, per 100 parts by mass of the rubber component is preferably 5 parts by mass or more, more preferably 10 parts by mass or more, but is preferably 50 parts by mass or less, more preferably 30 parts by mass or less. When the amount falls within the range indicated above, the advantageous effect tends to be better achieved.

The rubber composition may contain a resin.

Any resin generally used in the tire industry may be used, and examples include rosin-based resins, coumarone indene resins, $\alpha$-methylstyrene-based resins, terpene-based resins, p-t-butylphenol acetylene resins, acrylic resins, C5 resins, and C9 resins. Examples of usable commercially available resins include products of Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries, LTD., Taoka Chemical Co., Ltd., and Toagosei Co., Ltd. These resins may be used alone or in combinations

of two or more.

The amount of the resin, if present, per 100 parts by mass of the rubber component is preferably 1 part by mass or more, more preferably 5 parts by mass or more, but is preferably 30 parts by mass or less, more preferably 20 parts by mass or less. When the amount falls within the range indicated above, the advantageous effect tends to be better achieved.

The rubber composition may contain a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. These waxes may be used alone or in combinations of two or more. Among these, petroleum waxes are preferred, with paraffin waxes being more preferred.

The wax may be a product available from Ouchi Shinko Chemical Industrial Co., Ltd., Nippon Seiro Co., Ltd., or Seiko Chemical Co., Ltd., for example.

The amount of the wax, if present, per 100 parts by mass of the rubber component is preferably 0.3 parts by mass or more, more preferably 0.5 parts by mass or more, but is preferably 20 parts by mass or less, more preferably 10 parts by mass or less. When the amount falls within the range indicated above, the advantageous effect tends to be better achieved.

The rubber composition may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These antioxidants may be used alone or in combinations of two or more. Among these, p-phenylenediamine or quinoline antioxidants are preferred.

The antioxidant may be a product available from Seiko Chemical Co., Ltd., Sumitomo Chemical Co., Ltd., Ouchi Shinko Chemical Industrial Co., Ltd., or Flexsys, for example.

The amount of the antioxidant, if present, per 100 parts by mass of the rubber component is preferably 0.5 parts by mass or more, more preferably 1 part by mass or more, but is preferably 10 parts by mass or less, more preferably 5 parts by mass or less. When the amount falls within the range indicated above, the advantageous effect tends to be better achieved.

The rubber composition may contain stearic acid.

The stearic acid may be a conventional one, and examples include products of NOF Corporation, Kao Corporation, Fujifilm Wako Pure Chemical Corporation, and Chiba Fatty Acid Co., Ltd.

The amount of the stearic acid, if present, per 100 parts by mass of the rubber component is preferably 0.5 parts by mass or more, more preferably 1 part by mass or more, but is preferably 10 parts by mass or less, more preferably 5 parts by mass or less. When the amount falls within the range indicated above, the advantageous effect tends to be better achieved.

The rubber composition may contain zinc oxide.

The zinc oxide may be a conventional one, and examples include products of Mitsui Mining & Smelting Co., Ltd., Toho Zinc Co., Ltd., Hakusui Tech Co., Ltd., Seido Chemical Industry Co., Ltd., and Sakai Chemical Industry Co., Ltd.

The amount of the zinc oxide, if present, per 100 parts by mass of the rubber component is preferably 0.5 parts by mass or more, more preferably 1 part by mass or more, but is preferably 10 parts by mass or less, more preferably 5 parts by mass or less. When the amount falls within the range indicated above, the advantageous effect tends to be better achieved.

The rubber composition may contain sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be a product available from Tsurumi Chemical Industry Co., Ltd., Karuizawa Sulfur Co., Ltd., Shikoku Chemicals Corporation, Flexsys, Nippon Kanryu Industry Co., Ltd., or Hosoi Chemical Industry Co., Ltd., for example.

The amount of the sulfur, if present, per 100 parts by mass of the rubber component is preferably 0.1 parts by mass or more, more preferably 0.5 parts by mass or more, but is preferably 10 parts by mass or less, more preferably 5 parts by mass or less, still more preferably 3 parts by mass or less. When the amount falls within the range indicated above, the advantageous effect tends to be better achieved.

The rubber composition may contain a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These vulcanization accelerators may be used alone or in combinations of two or more. Among these, sulfenamide and/or guanidine vulcanization accelerators are preferred in order to more suitably achieve the advantageous effect.

The vulcanization accelerator may be a product available from Kawaguchi Chemical Industry Co., Ltd. or Ouchi Shinko Chemical Industrial Co., Ltd., for example.

The amount of the vulcanization accelerator, if present, per 100 parts by mass of the rubber component is preferably 1 part by mass or more, more preferably 2 parts by mass or more, but is preferably 10 parts by mass or less, more preferably 7 parts by mass or less. When the amount falls within the range indicated above, the advantageous effect tends to be better achieved.

In addition to the above components, the rubber composition may contain additives commonly used in the tire industry, such as organic peroxides, and fillers such as calcium carbonate, talc, alumina, clay, aluminum hydroxide, and mica. The amount of such additives is preferably 0.1 to 200 parts by mass per 100 parts by mass of the rubber component.

The rubber composition may be prepared, for example, by kneading the components using a rubber kneading machine such as an open roll mill or a Banbury mixer, and then vulcanizing the kneaded mixture.

The kneading conditions are as follows: in a base kneading step of kneading additives other than vulcanizing agents and vulcanization accelerators, the kneading temperature is usually 100 to 180°C, preferably 120 to 170°C, while in a final kneading step of kneading vulcanizing agents and vulcanization accelerators, the kneading temperature is usually 120°C or lower, preferably 80 to 110°C. The composition obtained after kneading vulcanizing agents and vulcanization accelerators is usually vulcanized by press vulcanization, for example. The vulcanization temperature is usually 140 to 190°C, preferably 150 to 185°C. The vulcanization time is usually 5 to 15 minutes.

The rubber composition is for use in tire treads. For use in a tread consisting of a cap tread and a base tread, the rubber composition can be suitably used in the cap tread.

The pneumatic tire of the present invention can be produced from the rubber composition by usual methods.

Specifically, the rubber composition before vulcanization may be extruded into the shape of a tread tire component and then assembled with other tire components on a tire building machine in a usual manner to build an unvulcanized tire. The unvulcanized tire may be heated and pressurized in a vulcanizer to form a tire.

It is sufficient that the tread of the pneumatic tire at least partially contain the rubber composition. The entire tread may contain the rubber composition.

The pneumatic tire can be suitably used as a winter tire (a tire for use on ice or snow such as a studless winter tire, a snow tire, or a studded tire) or an all-season tire, for example.

## EXAMPLES

The present invention will be specifically described with reference to, but not limited to, examples.

The chemicals used in the examples and comparative examples are listed below.

SBR 1: modified SBR prepared in Production Example 1 below (styrene content: 35% by mass, vinyl content: 45% by mass, Mw: 700,000, Mw/Mn: 2.25)
SBR 2: modified SBR prepared in Production Example 2 below (styrene content: 39% by mass, vinyl content: 31% by mass, Mw: 600,000, Mw/Mn: 2.00)
SBR 3: modified SBR prepared in Production Example 3 below (styrene content: 25% by mass, vinyl content: 39% by mass, Mw: 450,000, Mw/Mn: 1.90)
SBR 4: TUFDENE 3830 (S-SBR, styrene content: 33% by mass, vinyl content: 34% by mass, oil content per 100 parts by mass of rubber solids: 37.5 parts by mass, unmodified) available from Asahi Kasei Corporation (the amount indicated in the table represents the amount of rubber solids)
BR 1: modified BR prepared in Production Example 4 below (cis content: 38% by mass, Mw: 400,000)
BR 2: BR150B (cis content: 97% by mass, Mw: 500,000) available from Ube Industries, Ltd.
Silica: ULTRASIL VN3 ($N_2SA$: 175 $m^2/g$) available from Evonik Degussa
Carbon black: DIABLACK N220 ($N_2SA$: 114 $m^2/g$) available from Mitsubishi Chemical Corporation
Silane coupling agent 1: Si69 (bis(3-triethoxysilylpropyl)tetrasulfide) available from Evonik Degussa
Silane coupling agent 2: NXT-Z45 (a copolymer of linking units A and B, linking unit A: 55 mol%, linking unit B: 45 mol%) available from Momentive
Oil: DIANA PROCESS AH-24 (aromatic process oil) available from Idemitsu Kosan Co., Ltd.

Wax: OZOACE 0355 available from Nippon Seiro Co., Ltd.
Antioxidant: NOCRAC 6C (N-(1,3-dimethylbutyl)-N'-phenyl-p-phenylenediamine) available from Ouchi Shinko Chemical Industrial Co., Ltd.
Stearic acid: stearic acid beads "TSUBAKI" available from NOF Corporation
Zinc oxide: zinc oxide #3 available from Hakusui Tech Co., Ltd.
Sulfur: powdered sulfur available from Tsurumi Chemical Industry Co., Ltd.
Vulcanization accelerator 1: NOCCELER NS (N-tert-butyl-2-benzothiazolylsulfenamide) available from Ouchi Shinko Chemical Industrial Co., Ltd.
Vulcanization accelerator 2: NOCCELER D (diphenylguanidine) available from Ouchi Shinko Chemical Industrial Co., Ltd.

(Production Example 1)

A nitrogen-purged autoclave reactor was charged with cyclohexane, 2,2-bis(2-oxolanyl)propane, styrene, and 1,3-butadiene. After the temperature of the contents in the reactor was adjusted to 50°C, a solution of 1-lithiopiperidine in cyclohexane was added to start polymerization. The polymerization was carried out under adiabatic conditions, and the maximum temperature reached 78°C. Once the polymerization conversion rate reached 99%, additional 1,3-butadiene was added, followed by further polymerization for five minutes. Then, 2,2-dimethoxy-1-(3-trimethoxysilylpropyl)-1-aza-2-silacyclopentane was added as a modifier to perform a reaction. To this polymer solution was added an antioxidant (2,6-di-t-butyl-p-cresol: BHT), followed by removing the solvent by steam stripping. The resulting product was dried by a dryer to obtain SBR 1.

(Production Example 2)

An autoclave equipped with a stirrer was charged with cyclohexane, styrene, 1,3-butadiene, and tetramethylethylenediamine, followed by addition of n-butyllithium to start polymerization at 50°C. After 20 minutes from the start of the polymerization, a mixture of styrene and 1,3-butadiene was continuously added over 60 minutes. The maximum temperature during the polymerization reaction was 70°C.

After completion of the continuous addition, the polymerization reaction was further continued for 40 minutes. When the polymerization conversion rate was confirmed to be 100%, a 10% solution of polyorganosiloxane A in toluene was added to perform a reaction for 30 minutes. Then, methanol was added as a polymerization terminator to give a polymer solution. To the polymer solution was added IRGANOX 1520 (from Ciba-Geigy) as an antioxidant, followed by removing the polymerization solvent by steam stripping. The resulting product was vacuum-dried at 60°C for 24 hours to obtain SBR 2.

(Production Example 3)

A nitrogen-purged autoclave reactor was charged with cyclohexane, tetrahydrofuran, styrene, and 1,3-butadiene. After the temperature of the contents in the reactor was adjusted to 20°C, n-butyl lithium was added to start polymerization. The polymerization was carried out under adiabatic conditions, and the maximum temperature reached 85°C. Once the polymerization conversion rate reached 99%, additional butadiene was added, followed by further polymerization for five minutes. Then, 3-dimethylaminopropyltrimethoxysilane was added as a modifier to perform a reaction for 15 minutes. After completion of the polymerization reaction, 2,6-di-tert-butyl-p-cresol was added. Then, the solvent was removed by steam stripping, and the resulting product was dried on hot rolls adjusted at 110°C to obtain SBR 3.

(Production Example 4)

To a graduated flask in a nitrogen atmosphere were added 3-(N,N-dimethylamino)propyltrimethoxysilane and then anhydrous hexane to prepare a terminal modifier.

A sufficiently nitrogen-purged pressure-resistant vessel was charged with n-hexane, butadiene, and tetramethylethylenediamine (TMEDA), followed by increasing the temperature to 60°C. Next, butyllithium was added and then the temperature was increased to 50°C, followed by stirring for three hours. Subsequently, the terminal modifier was added, followed by stirring for 30 minutes. To the reaction solution were added methanol and 2,6-tert-butyl-p-cresol, and the resulting reaction solution was put into a stainless steel container containing methanol, followed by collecting aggregates. The aggregates were dried under reduced pressure for 24 hours to obtain a modified polybutadiene rubber (BR 1).

(Examples and Comparative Examples)

The chemicals other than the sulfur and vulcanization accelerators in the formulation amounts indicated in Table 1 were kneaded at 150°C for five minutes using a 1.7 L Banbury mixer (Kobe Steel, Ltd.) to give a kneaded mixture. Then, the sulfur and vulcanization accelerators were added to the kneaded mixture, followed by kneading at 80°C for five minutes using an open roll mill to obtain an unvulcanized rubber composition.

The unvulcanized rubber composition was press-vulcanized at 170°C for 10 minutes to obtain a vulcanized rubber composition.

Separately, the unvulcanized rubber composition prepared as above was formed into the shape of a cap tread and then assembled with other tire components to build an unvulcanized tire. The unvulcanized tire was press-vulcanized at 170°C for 10 minutes to obtain a test tire (size: 195/65R15).

The vulcanized rubber compositions and test tires prepared as above were evaluated as described below. Table 1 shows the results.

(Viscoelastic testing)

The -30°C E*, -10°C E*, 0°C tanδ, and 30°C tanδ of the vulcanized rubber compositions were measured using a viscoelastic spectrometer VES available from Iwamoto Seisakusho Co., Ltd. The conditions for these measurements are as follows.

-30°C E*: temperature = -30°C, initial strain = 10%, dynamic strain = 0.5%, frequency = 10 Hz
-10°C E*: temperature = -10°C, initial strain = 10%, dynamic strain = 0.25%, frequency = 10 Hz
0°C tanδ: temperature = 0°C, initial strain = 10%, dynamic strain = 2.5%, frequency = 10 Hz
30°C tanδ: temperature = 30°C, initial strain = 10%, dynamic strain = 2%, frequency = 10 Hz

(Fuel economy)

The rolling resistance of the test tires was measured using a rolling resistance tester by running each tire mounted on a 15 × 6JJ rim at an internal pressure of 230 kPa, a load of 3.43 kN, and a speed of 80 km/h. The rolling resistances are expressed as an index, with Comparative Example 1 set equal to 100 (rolling resistance index). A higher index indicates better fuel economy.

(Wet grip performance)

The test tires were mounted on each wheel of a vehicle (a front-engine, front-wheel-drive car of 2000 cc displacement made in Japan), and the braking distance from an initial speed of 100 km/h on a wet asphalt surface was determined and expressed as an index, with Comparative Example 1 set equal to 100 (wet skid performance index). A higher index indicates a shorter braking distance and thus better wet skid performance (wet grip performance).

(Ice grip performance)

The test tires were mounted on a front-engine, rear-wheel-drive car of 2000 cc displacement made in Japan. The car was driven on ice under the conditions below to evaluate the ice grip performance. Specifically, in the evaluation of ice grip performance, the distance required for the car travelling on ice to stop after the brakes that lock up were applied at 30 km/h (ice braking distance) was measured and expressed as an index, with Comparative Example 1 set equal to 100 (ice grip performance index). A higher index indicates better braking performance on ice (ice grip performance).

(On ice)

Test location: Proving ground in Asahikawa, Hokkaido
Air temperature: -6 to -1°C

[Table 1]

| | | Example | | | | | | | | Comparative Example | | | | | | | |
|---|---|---|---|---|---|---|---|---|---|---|---|---|---|---|---|---|---|
| | | 1 | 2 | 3 | 4 | 5 | 6 | 7 | 8 | 1 | 2 | 3 | 4 | 5 | 6 | 7 | 8 |
| Amount (parts by mass) | SBR 1 | 70 | 60 | 80 | 70 | 55 | 50 | 75 | 85 | | | | | | | | |
| | SBR 2 | | | | | | | | | | | 70 | | | | | 80 |
| | SBR 3 | | | | | | | | | | 70 | | | | | | |
| | SBR 4 | | | | | | | | | 70 | | | 70 | 70 | 70 | 80 | |
| | BR 1 | 15 | 20 | 10 | 15 | 25 | 25 | 15 | 10 | | | | 30 | 15 | 15 | | |
| | BR 2 | 15 | 20 | 10 | 15 | 20 | 25 | 10 | 5 | 30 | 30 | 30 | | 15 | 15 | 20 | 20 |
| | Silica | 60 | 60 | 60 | 60 | 60 | 60 | 60 | 60 | 60 | 60 | 60 | 60 | 60 | 60 | 60 | 60 |
| | Silane coupling agent 1 | | | | 6 | | | | | 6 | 6 | 6 | 6 | 6 | | | 6 |
| | Silane coupling agent 2 | 6 | 6 | 6 | | 6 | 6 | 6 | 6 | | | | | | 6 | 6 | |
| | Carbon black | 10 | 10 | 10 | 10 | 10 | 10 | 10 | 10 | 10 | 10 | 10 | 10 | 10 | 10 | 10 | 10 |
| | Oil | 20 | 20 | 20 | 20 | 20 | 20 | 20 | 20 | 20 | 20 | 20 | 20 | 20 | 20 | 20 | 20 |
| | Antioxidant | 2 | 2 | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 2 | 1 | 1 | 1 | 1 | 1 | 1 | 1 | 1 | 1 | 1 | 1 | 1 | 1 | 1 | 1 | 1 |
| Rubber properties | 0°C tanδ/30°C tanδ | 2.5 | 2.4 | 2.1 | 2.7 | 1.7 | 1.5 | 1.9 | 3.0 | 1.8 | 1.4 | 3.3 | 2.1 | 1.9 | 2.2 | 3.2 | 2.1 |
| | \|(−30°C E*)−(−10°C E*)\| [MPa] | 140 | 110 | 150 | 140 | 100 | 80 | 140 | 150 | 200 | 150 | 420 | 180 | 210 | 210 | 140 | 160 |
| | 0°C tanδ | 0.40 | 0.39 | 0.40 | 0.46 | 0.26 | 0.23 | 0.36 | 0.51 | 0.38 | 0.27 | 0.72 | 0.42 | 0.38 | 0.41 | 0.74 | 0.46 |
| | 30°C tanδ | 0.16 | 0.16 | 0.19 | 0.17 | 0.15 | 0.15 | 0.19 | 0.17 | 0.21 | 0.20 | 0.22 | 0.20 | 0.20 | 0.19 | 0.23 | 0.22 |
| | −30°C E* [MPa] | 150 | 120 | 160 | 160 | 130 | 110 | 160 | 165 | 215 | 180 | 435 | 190 | 219 | 220 | 170 | 195 |
| | −10°C E* [MPa] | 10 | 10 | 10 | 20 | 30 | 30 | 20 | 15 | 15 | 30 | 15 | 10 | 9 | 10 | 30 | 35 |
| Tire performance | Fuel economy | 112 | 115 | 110 | 109 | 118 | 120 | 110 | 108 | 100 | 102 | 96 | 103 | 101 | 104 | 90 | 94 |
| | Wet grip performance | 107 | 105 | 109 | 107 | 103 | 101 | 109 | 113 | 100 | 95 | 118 | 105 | 101 | 105 | 120 | 108 |
| | Ice grip performance | 108 | 112 | 106 | 108 | 115 | 118 | 107 | 103 | 100 | 102 | 95 | 100 | 100 | 100 | 98 | 90 |

Table 1 shows that the examples satisfying relationships (1) and (2) exhibited a balanced improvement of fuel economy, wet grip performance, and ice grip performance. Specifically, the examples were superior to Comparative Example 1 in all the evaluation items, while the comparative examples were equal or inferior to Comparative Example 1 in at least one of the evaluation items.

## Claims

1. A tread rubber composition, satisfying the following relationships (1) and (2):

$$|(-30°C\ E^*) - (-10°C\ E^*)| \leq 150\ [MPa] \quad (1)$$

wherein the term "-30°C E*" denotes a complex modulus measured at a temperature of -30°C, an initial strain of 10%, a dynamic strain of 0.5%, and a frequency of 10 Hz, and the term "-10°C E*" denotes a complex modulus measured at a temperature of -10°C, an initial strain of 10%, a dynamic strain of 0.25%, and a frequency of 10 Hz; and

$$1.5 \leq 0°C\ \tan\delta / 30°C\ \tan\delta \leq 3.0 \quad (2)$$

wherein the term "0°C tanδ" denotes a loss tangent measured at a temperature of 0°C, an initial strain of 10%, a dynamic strain of 2.5%, and a frequency of 10 Hz, and the term "30°C tanδ" denotes a loss tangent measured at a temperature of 30°C, an initial strain of 10%, a dynamic strain of 2%, and a frequency of 10 Hz.

2. The tread rubber composition according to claim 1,
wherein the |(-30°C E*) - (-10°C E*)| value in relationship (1) is 120 MPa or less.

3. The tread rubber composition according to claim 2,
wherein the |(-30°C E*) - (-10°C E*)| value in relationship (1) is 110 MPa or less.

4. The tread rubber composition according to any one of claims 1 to 3,
wherein the 0°C tanδ/30°C tanδ value in relationship (2) is 2.7 or less.

5. The tread rubber composition according to any one of claims 1 to 4,
wherein the 0°C tanδ/30°C tanδ value in relationship (2) is 2.1 or more.

6. The tread rubber composition according to any one of claims 1 to 5,
wherein the tread rubber composition contains, based on 100% by mass of a rubber component therein, 50% by mass or more of a styrene-butadiene rubber having a styrene content of 30% by mass or higher and a vinyl content of 40% by mass or higher.

7. The tread rubber composition according to claim 6,
wherein the tread rubber composition contains polybutadiene rubber.

8. The tread rubber composition according to claim 7,
wherein the polybutadiene rubber is a modified polybutadiene rubber.

9. A pneumatic tire, comprising
a tread at least partially comprising the rubber composition according to any one of claims 1 to 8.

10. The pneumatic tire according to claim 9,
wherein the pneumatic tire is a winter tire or all-season tire.

## Amended claims under Art. 19.1 PCT

1. (Amended). A winter tire or all-season tire, comprising
a tread at least partially comprising a tread rubber composition satisfying the following relationships (1) and (2) :

$$|(-30°C\ E^*) - (-10°C\ E^*)| \leq 150\ [MPa] \quad (1)$$

wherein the term "-30°C E*" denotes a complex modulus measured at a temperature of -30°C, an initial strain of

10%, a dynamic strain of 0.5%, and a frequency of 10 Hz, and the term "-10°C E*" denotes a complex modulus measured at a temperature of -10°C, an initial strain of 10%, a dynamic strain of 0.25%, and a frequency of 10 Hz; and

$$1.5 \leq 0°C\ \tan\delta / 30°C\ \tan\delta \leq 3.0 \quad (2)$$

wherein the term "0°C tanδ" denotes a loss tangent measured at a temperature of 0°C, an initial strain of 10%, a dynamic strain of 2.5%, and a frequency of 10 Hz, and the term "30°C tanδ" denotes a loss tangent measured at a temperature of 30°C, an initial strain of 10%, a dynamic strain of 2%, and a frequency of 10 Hz.

**2.** (Amended). The winter tire or all-season tire according to claim 1,
wherein the |(-30°C E*) - (-10°C E*)| value in relationship (1) is 120 MPa or less.

**3.** (Amended). The winter tire or all-season tire according to claim 2,
wherein the |(-30°C E*) - (-10°C E*)| value in relationship (1) is 110 MPa or less.

**4.** (Amended). The winter tire or all-season tire according to any one of claims 1 to 3,
wherein the 0°C tan5/30°C tanδ value in relationship (2) is 2.7 or less.

**5.** (Amended). The winter tire or all-season tire according to any one of claims 1 to 4,
wherein the 0°C tanδ/30°C tanδ value in relationship (2) is 2.1 or more.

**6.** (Amended). The winter tire or all-season tire according to any one of claims 1 to 5,
wherein the tread rubber composition contains, based on 100% by mass of a rubber component therein, 50% by mass or more of a styrene-butadiene rubber having a styrene content of 30% by mass or higher and a vinyl content of 40% by mass or higher.

**7.** (Amended). The winter tire or all-season tire according to claim 6,
wherein the tread rubber composition contains polybutadiene rubber.

**8.** (Amended). The winter tire or all-season tire according to claim 7,
wherein the polybutadiene rubber is a modified polybutadiene rubber.

**9.** (Cancelled).

**10.** (Cancelled).

**Statement under Art. 19.1 PCT**

Claim 1: This claim has been amended to recite "A winter tire or all-season tire, comprising a tread at least partially comprising", which is supported by original claims 9 and 10 as filed.

Claims 2 to 8: These claims have been amended in form as a result of the amendment of claim 1.

Claims 9 and 10: These claims are cancelled.

**INTERNATIONAL SEARCH REPORT**

International application No. PCT/JP2019/027288

A. CLASSIFICATION OF SUBJECT MATTER
Int.Cl. B60C11/00(2006.01)i, B60C1/00(2006.01)i, C08L9/00(2006.01)i, C08L9/06(2006.01)i, C08L15/00(2006.01)i

According to International Patent Classification (IPC) or to both national classification and IPC

B. FIELDS SEARCHED

Minimum documentation searched (classification system followed by classification symbols)
Int.Cl. B60C11/00, B60C1/00, C08L9/00, C08L9/06, C08L15/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2014/021002 A1 (SUMITOMO RUBBER INDUSTRIES, LTD.) 06 February 2014, claims, examples & DE 112013003160 T & CN 104487506 A | 1-10 |
| X | JP 2014-118513 A (SUMITOMO RUBBER INDUSTRIES, LTD.) 30 June 2014, claims, examples (Family: none) | 1-10 |
| X | WO 2014/007309 A1 (SUMITOMO RUBBER INDUSTRIES, LTD.) 09 January 2014, claims, paragraph [0099], examples & JP 2014-12798 A & US 2015/0126674 A1, claims, paragraph [0126], examples & EP 2871211 A1 & CN 104379660 A | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17.09.2019 | 15.10.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2019/027288

C (Continuation). DOCUMENTS CONSIDERED TO BE RELEVANT

| Category* | Citation of document, with indication, where appropriate, of the relevant passages | Relevant to claim No. |
|---|---|---|
| X | JP 2018-123260 A (SUMITOMO RUBBER INDUSTRIES, LTD.) 09 August 2018, claims, paragraph [0136], examples (Family: none) | 1-10 |
| X | JP 2017-171707 A (SUMITOMO RUBBER INDUSTRIES, LTD.) 28 September 2017, claims, examples (Family: none) | 1-7, 9-10 |
| X | JP 2015-232110 A (SUMITOMO RUBBER INDUSTRIES, LTD.) 24 December 2015, claims, paragraph [0085], examples & US 2015/0329704 A1, claims, paragraph [0085], examples & EP 2949695 A1 & CN 105086027 A | 1-7, 9-10 |
| X | WO 2018/105230 A1 (SUMITOMO RUBBER INDUSTRIES, LTD.) 14 June 2018, claims, paragraph [0077], examples (Family: none) | 1-7, 9-10 |
| A | JP 2017-206194 A (BRIDGESTONE CORPORATION) 24 November 2017, entire text, all drawings (Family: none) | 1-10 |
| A | WO 2016/084370 A1 (BRIDGESTONE CORPORATION) 02 June 2016, entire text, all drawings & US 2019/0085156 A1 & EP 3225657 A1 | 1-10 |
| A | JP 2016-94552 A (SUMITOMO RUBBER INDUSTRIES, LTD.) 26 May 2016, entire text, all drawings (Family: none) | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013249423 A